# EUROPEAN PATENT APPLICATION

(11) **EP 4 560 378 A1**
(43) Date of publication of application: **28.05.2025**
(21) Application number: 22954779.9
(22) Date of filing: 21.10.2022
(51) Int. Cl.: G02B 27/01, B60K 35/00, B60R 11/02, B60R 11/00, G02B 27/28

(54) **DISPLAY DEVICE AND VEHICLE**

(30) Priority: 09.08.2022 CN 202210950023
(71) Applicant: Shenzhen Yinwang Intelligent Technologies Co., Ltd., Shenzhen, Guangdong 518129 (CN)
(72) Inventor: ZHAO, Qing, Shenzhen, Guangdong 518129 (CN); CHEN, Tuo, Shenzhen, Guangdong 518129 (CN); ZHAO, Han, Shenzhen, Guangdong 518129 (CN)
(74) Representative: Maiwald GmbH
(86) International application number: PCT/CN2022/126614
(87) International publication number: WO 2024/031837

(57) **Abstract**

A display device (901) and a transportation means are disclosed, and may be used in the display field, for example, may be used in an HUD in the vehicle field. The display device (901) includes an image generation apparatus (101), a screen (102), a screen support (103), and a baffle (104). The image generation apparatus (101) is configured to: generate imaging light that carries image information, and emit the imaging light to the screen (102). The screen (102) is configured to: receive and display the imaging light generated by the image generation apparatus (101). The screen support (103) is configured to support the screen (102). An edge of the screen support (103) may protrude from an edge of the screen (102). The baffle (104) is located around the image generation apparatus (101), and is configured to block stray light reaching the screen support (103). The baffle (104) is added around the screen (102) of the display device (901) to block the stray light reaching the screen support (103), to prevent the screen support (103) from being burnt due to overheating, thereby prolonging a service life of the display device (901) and improving user experience.

## Description

This application claims priority to Chinese Patent Application No. 202210950023.3, filed with the China National Intellectual Property Administration on August 9, 2022 and entitled "DISPLAY DEVICE AND TRANSPORTATION MEANS", which is incorporated herein by reference in its entirety.

### TECHNICAL FIELD

This application relates to the display field, and in particular, to a display device and a transportation means.

### BACKGROUND

A display device is an apparatus having a function of displaying an image that can be viewed by a user, for example, a device like a head up display (head up display, HUD), a projector, or a desktop display.

For a product deployed with a display device, direct sunlight has great impact on both the product and experience. The HUD is used as an example. Direct sunlight on a mechanical part of the HUD overheats the mechanical part, thereby shortening a service life of the display device. If the mechanical part is not made of a high-temperature-resistant material, the mechanical part may be burnt, causing a safety problem.

### SUMMARY

Embodiments of this application provide a display device and a transportation means. A baffle is added all around a screen of the display device to block stray light reaching a mechanical part, namely, a screen support (used to support the screen of the display device), so as to prevent the screen support from being burnt due to overheating, thereby prolonging a service life of the display device.

In view of this, embodiments of this application provide the following technical solutions.

According to a first aspect, an embodiment of this application first provides a display device that can be used in the display field, for example, may be used in an HUD in a vehicle field scenario. The display device includes an image generation apparatus, a screen, a screen support, and a baffle, where the image generation apparatus is configured to: generate imaging light that carries image information, and emit the imaging light to the screen; the screen is configured to receive and display the imaging light generated by the image generation apparatus; and the screen support is configured to support the screen. In this embodiment of this application, an edge of the screen support may protrude from an edge of the screen. The baffle is located around the image generation apparatus, for example, may be located all around the image generation apparatus, and is configured to block stray light reaching the screen support. The baffle may be in any form or shape that can be used to block light. This is not limited in this application.

In the foregoing implementation of this application, the baffle is added around the screen of the display device to block the stray light reaching the mechanical part, namely, the screen support, so as to prevent the screen support from being burnt due to overheating, thereby prolonging a service life of the display device and improving user experience.

In a possible implementation of the first aspect, a property of the baffle may include a high-temperature-resistant material.

In the foregoing implementation of this application, the high-temperature-resistant material is selected for the baffle to achieve better heat conduction effect.

In a possible implementation of the first aspect, an included angle (the included angle may be referred to as a plane included angle) between a plane on which the baffle is located and a plane on which the screen is located is within a preset angle range. For example, the plane included angle is not less than a first included angle value (for example, 10°), and is not greater than a second included angle value (for example, 170°). The first included angle value and the second included angle value may be customized. For example, a value range of the two included angle values may be adjusted based on a height of the baffle. This is not limited in this application.

In the foregoing implementation of this application, the tilt angle of the baffle relative to the screen may be customized, and is flexible.

In a possible implementation of the first aspect, the display device may further include a light filter whose emergent angle is within a preset threshold range (for example, the emergent angle is ±10°). In this embodiment of this application, the preset threshold range may be set to a small value. Therefore, the light filter used in this application may also be referred to as a small-angle light filter. The light filter is located above the screen, and is configured to allow a light beam whose emergent angle is within the preset threshold range to pass through, where the light beam is propagated by the image generation apparatus to the light filter.

In the foregoing implementation of this application, the small-angle light filter is added above the screen, so that glare with a large emergent angle cannot pass through. In this way, solar glare can be greatly reduced.

In a possible implementation of the first aspect, an included angle between the light filter and the screen is greater than zero. In other words, the light filter and the screen may be disposed at a specific included angle, and the light filter and the screen are not parallel.

In the foregoing implementation of this application, an objective of setting the included angle between the light filter and the screen is to prevent specular reflection and improve user experience.

In a possible implementation of the first aspect, the display device may further include a polarizing film and a quarter wave plate. Both the polarizing film and the quarter wave plate are located on a same side of the screen, where sunlight is sequentially emitted into the polarizing film, the quarter wave plate, and the screen. The polarizing film is configured to: transmit S-polarized light and block transmission of P-polarized light. The quarter wave plate is configured to transmit the S-polarized light transmitted by the polarizing film, so that the S-polarized light transmitted by the quarter wave plate for the first time is changed to P-polarized light after being reflected by the screen and then transmitted by the quarter wave plate again, that is, the S-polarized light is changed to P-polarized light after passing through the quarter wave plate twice. It should be noted herein that, that the sunlight is sequentially emitted into the polarizing film, the quarter wave plate, and the screen means that an optical path of the sunlight sequentially passes through the polarizing film, the quarter wave plate, and the screen. After the sunlight is emitted into each of the foregoing components, a component of a light beam included in the sunlight may change. Details are not described in this application. It should be further noted that, in the following implementations, a case in which sunlight is sequentially emitted into each component is similar, and details are not described in the following implementations.

In the foregoing implementation of this application, a combination of the polarizing film and the quarter wave plate may be further used to eliminate glare. The polarizing film transmits S-polarized light, the S-polarized light becomes P-polarized light after passing through the quarter wave plate twice, and the P-polarized light cannot be emitted from the polarizing film. Therefore, glare can be reduced.

In a possible implementation of the first aspect, the display device may further include a dust-proof cover, a polarizing film located on the dust-proof cover, and a quarter wave plate located on the screen, where sunlight is sequentially emitted into the dust-proof cover, the polarizing film, the quarter wave plate, and the screen; the polarizing film is configured to: transmit S-polarized light and block transmission of P-polarized light; and the quarter wave plate is configured to transmit the S-polarized light transmitted by the polarizing film, so that the S-polarized light transmitted by the quarter wave plate for the first time is changed to P-polarized light after being reflected by the screen and then transmitted by the quarter wave plate again.

In the foregoing implementation of this application, a combination of the polarizing film and the quarter wave plate is still used to eliminate glare. However, the polarizing film is deployed under the dust-proof cover (that is, attached to a lower surface of the dust-proof cover), and the polarizing film is flexibly deployed.

In a possible implementation of the first aspect, the display device may further include: a dust-proof cover, a polarizing film located on the dust-proof cover, and a quarter wave plate located on the screen, where sunlight is sequentially emitted into the polarizing film, the dust-proof cover, the quarter wave plate, and the screen; the polarizing film is configured to: transmit S-polarized light and block transmission of P-polarized light; and the quarter wave plate is configured to transmit the S-polarized light transmitted by the polarizing film, so that the S-polarized light transmitted by the quarter wave plate for the first time is changed to P-polarized light after being reflected by the screen and then transmitted by the quarter wave plate again.

In the foregoing implementation of this application, a combination of the polarizing film and the quarter wave plate is still used to eliminate glare. However, the polarizing film is deployed on the dust-proof cover (that is, attached to an upper surface of the dust-proof cover), and the polarizing film is flexibly deployed.

In a possible implementation of the first aspect, the display device may further include: a dust-proof cover, at least one curved mirror, a polarizing film located on one curved mirror (which may be referred to as a target curved mirror) of the at least one curved mirror, and a quarter wave plate located on the screen, where sunlight is sequentially emitted into the dust-proof cover, a curved mirror other than the target curved mirror in the at least one curved mirror, the target curved mirror (including the polarizing film), the quarter wave plate, and the screen. It should be noted that, because the polarizing film may be attached to any curved mirror, a sequence in which the sunlight is emitted into the curved mirror is determined by a position relationship between the target curved mirror (including the polarizing film) and the curved mirror other than the target curved mirror in the at least one curved mirror. The foregoing emitting sequence is merely an example, and is not limited in this application. The polarizing film is configured to: transmit S-polarized light and block transmission of P-polarized light. The quarter wave plate is configured to transmit the S-polarized light transmitted by the polarizing film, so that the S-polarized light transmitted by the quarter wave plate for the first time is changed to P-polarized light after being reflected by the screen and then transmitted by the quarter wave plate again.

In the foregoing implementation of this application, a deployment position of the polarizing film is flexible, and the polarizing film is universally applicable.

In a possible implementation of the first aspect, the at least one curved mirror may include a first curved mirror and a second curved mirror; and the first curved mirror and the second curved mirror are configured to sequentially reflect the imaging light. The sequentially reflected imaging light may be further projected onto a reflection element (for example, a windshield), to form a virtual image to be received by a human eye.

In the foregoing implementation of this application, the display device may further include the curved mirror configured to reflect the imaging light, which is implementable.

A second aspect of this application further provides a display device, where the display device includes an image generation apparatus, a screen, a screen support, and a light filter; the image generation apparatus is configured to: generate imaging light that carries image information, and emit the imaging light to the screen; the screen is configured to: receive and display the imaging light generated by the image generation apparatus; and the screen support is configured to support the screen. In this embodiment of this application, an edge of the screen support may protrude from an edge of the screen. The light filter is located above the screen, and is configured to allow a light beam whose emergent angle is within a preset threshold range to pass through. The light beam is propagated by the image generation apparatus to the light filter. An emergent angle of the light beam passing through the light filter is within the preset threshold range (for example, the emergent angle is ±10°). The preset threshold range may be set to a small value. Therefore, the light filter used in this application may also be referred to as a small-angle light filter.

In the foregoing implementation of this application, the small-angle light filter is added above the screen, so that glare with a large emergent angle cannot pass through. In this way, solar glare can be greatly reduced, and user experience can be improved.

In a possible implementation of the second aspect, an included angle between the light filter and the screen is greater than zero. In other words, the light filter and the screen may be disposed at a specific included angle, and the light filter and the screen are not parallel.

In the foregoing implementation of this application, an objective of setting the included angle between the light filter and the screen is to prevent specular reflection and improve user experience.

In a possible implementation of the second aspect, the display device may further include a polarizing film and a quarter wave plate, where both the polarizing film and the quarter wave plate are located on a same side of the screen, and sunlight is sequentially emitted into the polarizing film, the quarter wave plate, and the screen; the polarizing film is configured to: transmit S-polarized light and block transmission of P-polarized light; and the quarter wave plate is configured to transmit the S-polarized light transmitted by the polarizing film, so that the S-polarized light transmitted by the quarter wave plate for the first time is changed to P-polarized light after being reflected by the screen and then transmitted by the quarter wave plate again.

In the foregoing implementation of this application, a combination of the polarizing film and the quarter wave plate may be further used to eliminate glare. The polarizing film transmits S-polarized light, the S-polarized light becomes P-polarized light after passing through the quarter wave plate twice, and the P-polarized light cannot be emitted from the polarizing film. Therefore, glare can be reduced.

In a possible implementation of the second aspect, the display device may further include a dust-proof cover, a polarizing film located on the dust-proof cover, and a quarter wave plate located on the screen, where sunlight is sequentially emitted into the dust-proof cover, the polarizing film, the quarter wave plate, and the screen; the polarizing film is configured to: transmit S-polarized light and block transmission of P-polarized light; and the quarter wave plate is configured to transmit the S-polarized light transmitted by the polarizing film, so that the S-polarized light transmitted by the quarter wave plate for the first time is changed to P-polarized light after being reflected by the screen and then transmitted by the quarter wave plate again.

In the foregoing implementation of this application, a combination of the polarizing film and the quarter wave plate is still used to eliminate glare. However, the polarizing film is deployed under the dust-proof cover (that is, attached to a lower surface of the dust-proof cover), and the polarizing film is flexibly deployed.

In a possible implementation of the second aspect, the display device may further include a dust-proof cover, a polarizing film located on the dust-proof cover, and a quarter wave plate located on the screen, where sunlight is sequentially emitted into the polarizing film, the dust-proof cover, the quarter wave plate, and the screen; the polarizing film is configured to: transmit S-polarized light and block transmission of P-polarized light; and the quarter wave plate is configured to transmit the S-polarized light transmitted by the polarizing film, so that the S-polarized light transmitted by the quarter wave plate for the first time is changed to P-polarized light after being reflected by the screen and then transmitted by the quarter wave plate again.

In the foregoing implementation of this application, a combination of the polarizing film and the quarter wave plate is still used to eliminate glare. However, the polarizing film is deployed on the dust-proof cover (that is, attached to an upper surface of the dust-proof cover), and the polarizing film is flexibly deployed.

In a possible implementation of the second aspect, the display device may further include: a dust-proof cover, at least one curved mirror, a polarizing film located on one curved mirror (which may be referred to as a target curved mirror) of the at least one curved mirror, and a quarter wave plate located on the screen, where sunlight is sequentially emitted into the dust-proof cover, a curved mirror other than the target curved mirror in the at least one curved mirror, the target curved mirror (including the polarizing film), the quarter wave plate, and the screen. It should be noted that, because the polarizing film may be attached to any curved mirror, a sequence in which the sunlight is emitted into the curved mirror is determined by a position relationship between the target curved mirror (including the polarizing film) and the curved mirror other than the target curved mirror in the at least one curved mirror. The foregoing emitting sequence is merely an example, and is not limited in this application. The polarizing film is configured to: transmit S-polarized light and block transmission of P-polarized light. The quarter wave plate is configured to transmit the S-polarized light transmitted by the polarizing film, so that the S-polarized light transmitted by the quarter wave plate for the first time is changed to P-polarized light after being reflected by the screen and then transmitted by the quarter wave plate again.

In the foregoing implementation of this application, a deployment position of the polarizing film is flexible, and the polarizing film is universally applicable.

In a possible implementation of the second aspect, the display device may further include a baffle, where the baffle is located around the image generation apparatus, for example, may be located all around the image generation apparatus, and is configured to block stray light reaching the screen support. The baffle may be in any form or shape that can be used to block light. This is not limited in this application.

In the foregoing implementation of this application, the baffle is added around the screen of the display device to block the stray light reaching the mechanical part, namely, the screen support, so as to prevent the screen support from being burnt due to overheating, thereby prolonging a service life of the display device and improving user experience.

In a possible implementation of the second aspect, a property of the baffle may include a high-temperature-resistant material.

In the foregoing implementation of this application, the high-temperature-resistant material is selected for the baffle to achieve better heat conduction effect.

In a possible implementation of the second aspect, an included angle (the included angle may be referred to as a plane included angle) between a plane on which the baffle is located and a plane on which the screen is located is within a preset angle range. For example, the plane included angle is not less than a first included angle value (for example, 10°), and is not greater than a second included angle value (for example, 170°). The first included angle value and the second included angle value may be customized. For example, a value range of the two included angle values may be adjusted based on a height of the baffle. This is not limited in this application.

In the foregoing implementation of this application, the tilt angle of the baffle relative to the screen may be customized, and is flexible.

In a possible implementation of the second aspect, the at least one curved mirror may include a first curved mirror and a second curved mirror; and the first curved mirror and the second curved mirror are configured to sequentially reflect the imaging light. The sequentially reflected imaging light may be further projected onto a reflection element (for example, a windshield), to form a virtual image to be received by a human eye.

In the foregoing implementation of this application, the display device may further include the curved mirror configured to reflect the imaging light, which is implementable.

A third aspect of this application further provides a display device, where the display device includes an image generation apparatus, a screen, a screen support, a polarizing film, and a quarter wave plate; the image generation apparatus is configured to: generate imaging light that carries image information, and emit the imaging light to the screen, where the imaging light may be referred to as first imaging light; the screen is configured to: receive and display the first imaging light generated by the image generation apparatus; and the screen support is configured to support the screen. In this embodiment of this application, an edge of the screen support may protrude from an edge of the screen. Sunlight is sequentially emitted into the polarizing film, the quarter wave plate, and the screen. The polarizing film is configured to: transmit S-polarized light and block transmission of P-polarized light. The quarter wave plate is configured to transmit the S-polarized light transmitted by the polarizing film, so that the S-polarized light transmitted by the quarter wave plate for the first time is changed to P-polarized light after being reflected by the screen and then transmitted by the quarter wave plate again.

In the foregoing implementation of this application, a combination of the polarizing film and the quarter wave plate may be further used to eliminate glare. The polarizing film transmits S-polarized light, the S-polarized light becomes P-polarized light after passing through the quarter wave plate twice, and the P-polarized light cannot be emitted from the polarizing film. Therefore, glare can be reduced.

In a possible implementation of the third aspect, both the polarizing film and the quarter wave plate may be located on the screen.

In the foregoing implementation of this application, an implementation of deployment positions of the polarizing film and the quarter wave plate is described, and is flexible.

In a possible implementation of the third aspect, the display device may further include a dust-proof cover, where the polarizing film may be located on the dust-proof cover (for example, deployed on an upper surface or a lower surface of the dust-proof cover). In this case, if the polarizing film is deployed on the lower surface of the dust-proof cover, sunlight is sequentially emitted into the dust-proof cover, the polarizing film, the quarter wave plate, and the screen; or if the polarizing film is deployed on the upper surface of the dust-proof cover, sunlight is sequentially emitted into the polarizing film, the dust-proof cover, the quarter wave plate, and the screen. Alternatively, the polarizing film may be located at one curved mirror (which may be referred to as a target curved mirror) of at least one curved mirror. In this case, sunlight is sequentially emitted into the dust-proof cover, a curved mirror other than the target curved mirror in the at least one curved mirror, the target curved mirror (including the polarizing film), the quarter wave plate, and the screen. It should be noted that because the polarizing film may be attached to any curved mirror, a sequence in which sunlight is emitted into the curved mirror is determined by a position relationship between the target curved mirror (including the polarizing film) and the curved mirror other than the target curved mirror in the at least one curved mirror. The foregoing emitting sequence is merely an example. This is not limited in this application.

In the foregoing implementation of this application, a deployment position of the polarizing film is flexible, and the polarizing film is universally applicable.

In a possible implementation of the third aspect, the display device may further include a light filter whose emergent angle is within a preset threshold range (for example, the emergent angle is ±10°). In this embodiment of this application, the preset threshold range may be set to a small value. Therefore, the light filter used in this application may also be referred to as a small-angle light filter. The light filter is located above the screen, and is configured to allow a light beam whose emergent angle is within the preset threshold range to pass through, where the light beam is propagated by the image generation apparatus to the light filter.

In the foregoing implementation of this application, the small-angle light filter is added above the screen, so that glare with a large emergent angle cannot pass through. In this way, solar glare can be greatly reduced.

In a possible implementation of the third aspect, an included angle between the light filter and the screen is greater than zero. In other words, the light filter and the screen may be disposed at a specific included angle, and the light filter and the screen are not parallel.

In the foregoing implementation of this application, an objective of setting the included angle between the light filter and the screen is to prevent specular reflection and improve user experience.

In a possible implementation of the third aspect, the display device may further include a baffle, where the baffle is located around the image generation apparatus, for example, may be located all around the image generation apparatus, and is configured to block stray light reaching the screen support. The baffle may be in any form or shape that can be used to block light. This is not limited in this application.

In the foregoing implementation of this application, the baffle is added around the screen of the display device to block the stray light reaching the mechanical part, namely, the screen support, so as to prevent the screen support from being burnt due to overheating, thereby prolonging a service life of the display device and improving user experience.

In a possible implementation of the third aspect, a property of the baffle may include a high-temperature-resistant material.

In the foregoing implementation of this application, the high-temperature-resistant material is selected for the baffle to achieve better heat conduction effect.

In a possible implementation of the third aspect, an included angle (the included angle may be referred to as a plane included angle) between a plane on which the baffle is located and a plane on which the screen is located is within a preset angle range. For example, the plane included angle is not less than a first included angle value (for example, 10°), and is not greater than a second included angle value (for example, 170°). The first included angle value and the second included angle value may be customized. For example, a value range of the two included angle values may be adjusted based on a height of the baffle. This is not limited in this application.

In the foregoing implementation of this application, the tilt angle of the baffle relative to the screen may be customized, and is flexible.

In a possible implementation of the third aspect, the at least one curved mirror may include a first curved mirror and a second curved mirror, where the first curved mirror and the second curved mirror are configured to sequentially reflect the imaging light. The sequentially reflected imaging light may be further projected onto a reflection element (for example, a windshield), to form a virtual image to be received by a human eye.

In the foregoing implementation of this application, the display device may further include the curved mirror configured to reflect the imaging light, which is implementable.

A fourth aspect of this application provides a transportation means. The transportation means include the display device according to the first aspect or any optional implementation of the first aspect, the second aspect or any optional implementation of the second aspect, and the third aspect or any optional implementation of the third aspect. The display device is installed on the transportation means.

In a possible implementation of the fourth aspect, the transportation means may further include a reflection element (for example, a windshield), where the display device is configured to project imaging light onto the reflection element, and the reflection element is configured to reflect the imaging light to form a virtual image, so that the virtual image is received by a human eye.

### BRIEF DESCRIPTION OF DRAWINGS

FIG. 1 is a diagram of a structure of a display device according to an embodiment of this application;
FIG. 2 is a diagram of a relationship between a baffle and a protrusion size of an edge of a screen support according to an embodiment of this application;
FIG. 3 is a diagram of a plane included angle between a baffle and a screen according to an embodiment of this application;
FIG. 4 is a diagram of energy simulation result comparison of solar load of a screen support according to an embodiment of this application;
FIG. 5 is a diagram of another structure of a display device according to an embodiment of this application;
FIG. 6 is a diagram of another structure of a display device according to an embodiment of this application;
FIG. 7 is a diagram of another structure of a display device according to an embodiment of this application;
FIG. 8 is a diagram of another structure of a display device according to an embodiment of this application;
FIG. 9 is a diagram in which a display device is installed on a transportation means according to an embodiment of this application; and
FIG. 10 is a diagram of a possible functional framework of a transportation means according to an embodiment of this application.

### DESCRIPTION OF EMBODIMENTS

Embodiments of this application provide a display device and a transportation means. A baffle is added around a screen of the display device to block stray light reaching a mechanical part, namely, a screen support, so as to prevent the screen support from being burnt due to overheating, thereby prolonging a service life of the display device, reducing user costs, and improving user experience.

In the specification, claims, and accompanying drawings of this application, the terms "first", "second", and the like are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include" and "have" and any other variants mean to cover the non-exclusive inclusion, so that a process, method, system, product, or device that includes a series of units is not necessarily limited to those units, but may include other units not expressly listed or inherent to such a process, method, system, product, or device.

An application scenario of the display device in this application may be a device like an HUD, an in-vehicle display, a projector, a desktop display, augmented display (augmented reality, AR), or virtual display (virtual reality, VR). For a product deployed with a display device, direct sunlight has great impact on both the product and user experience. The HUD is used as an example. Direct sunlight on a mechanical part (for example, a screen support) of the HUD overheats the mechanical part, thereby shortening a service life of the display device. If the mechanical part is not made of a high-temperature-resistant material, the mechanical part may be burnt.

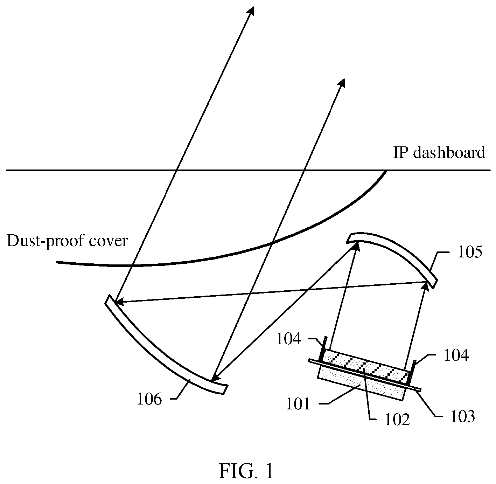

Therefore, this application provides a display device. For ease of description, the following embodiments of this application use an HUD as an example to describe a structure of the display device. FIG. 1 is a diagram of a structure of a display device according to an embodiment of this application. As shown in FIG. 1, the display device includes: an image generation apparatus 101, a screen 102, a screen support 103, and baffles 104. The image generation apparatus 101 is configured to: generate imaging light that carries image information, and emit the imaging light to the screen, where the imaging light may be referred to as first imaging light. The screen 102 may also be referred to as an imaging screen (for example, a diffuser screen), and is configured to: receive and display the first imaging light generated by the image generation apparatus 101. The screen support 103 is configured to support the screen 102. In this embodiment of this application, an edge of the screen support 103 may protrude from an edge of the screen 102 (as shown in FIG. 1). The baffles 104 are located around the image generation apparatus 101, for example, may be located all around the image generation apparatus, and are configured to block stray light reaching the screen support 103. The baffle 104 may be in any form or shape that can be used to block light. This is not limited in this application. It should be noted that FIG. 1 shows the baffle 104 from a perspective of a main view, only baffles on the left and right opposite sides are shown, and baffles on the front and rear sides are not shown in FIG. 1. It should be further noted that, relative distances between the image generation apparatus 101, the screen 102, the screen support 103, and the baffles 104, sizes of the image generation apparatus 101, the screen 102, the screen support 103, and the baffles 104, and the like shown in FIG. 1 are all examples, are merely intended to show relative position relationships between the image generation apparatus 101, the screen 102, the screen support 103, and the baffles 104, and do not constitute a limitation on actual application. For example, a relative position between the image generation apparatus 101 and the screen 102 in FIG. 1 is merely an example. During actual application, the image generation apparatus 101 and the screen 102 are separated by a specific distance (this is determined based on a specific application scenario). This is not specifically limited in this application. Other subsequent accompanying drawings are similar, and details are not described in the following.

It should be noted that, in some implementations of this application, the baffle 104 may be located in only at least one position all around the image generation apparatus 101. For example, baffles 104 are disposed on only two opposite sides around the image generation apparatus 101. In this way, a function of partially blocking stray light reaching the screen support 103 can still be implemented. For ease of description, in the following embodiments of this application, an example in which the baffle 104 is located all around the image generation apparatus 101 is used for description. It should be noted herein that there may be one or more baffles 104 located around the image generation apparatus 101, or the baffle 104 may be an entire integrally formed baffle. For example, if the baffle 104 is disposed all around the image generation apparatus 101, four baffles 104 may jointly surround the image generation apparatus 101, or an entire baffle 104 may surround the screen 102 in a bent manner. This is not specifically limited in this application. For ease of description, in the following embodiments of this application, an example in which four baffles 104 jointly surround the image generation apparatus 101 is used for description.

Optionally, after the screen 102, an optical element like an optical path folding mirror or a reflection mirror may be further disposed, and is configured to project the first imaging light on the screen 102 onto a reflection element, so that a virtual image formed on the reflection element is received by a human eye. In an example, the optical element in the HUD may be two curved mirrors. As shown in FIG. 1, the two curved mirrors are respectively referred to as a first curved mirror 105 and a second curved mirror 106. The first curved mirror 105 is configured to reflect the first imaging light, to obtain imaging light reflected for the first time. The second curved mirror 106 is configured to reflect the imaging light reflected for the first time, to obtain imaging light reflected for the second time, which may be referred to as second imaging light. The second imaging light may be further projected onto a windshield (for example, projected onto the windshield after passing through a dust-proof cover), to form a virtual image to be received by a human eye. It should be noted that there may be more than one source of stray light that is blocked by the baffles 104. In an example, the stray light may be stray light obtained by reflecting sunlight from the first curved mirror 105 to the second curved mirror 106 after the sunlight is irradiated to the first curved mirror 105.

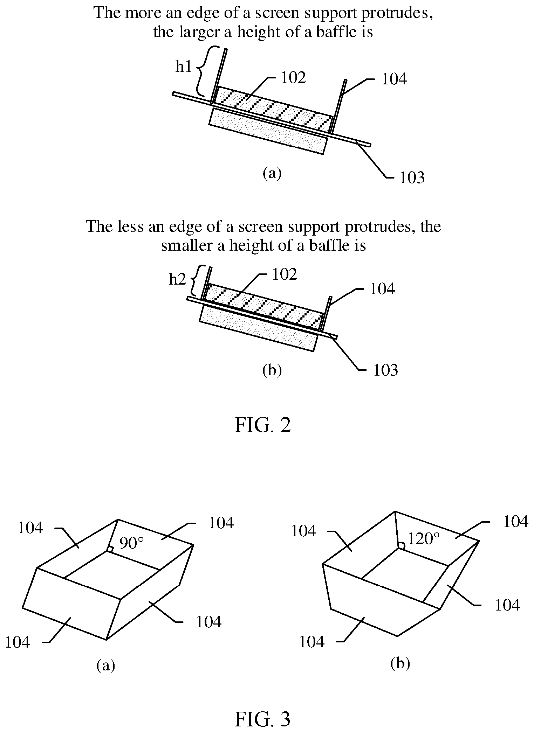

It should be noted that, in some implementations of this application, a height of the baffle 104 may be set based on a size of the screen support 103, and the height of the baffle 104 is adjusted to block stray light reaching the screen support 103. For example, refer to FIG. 2. The more the edge of the screen support 103 protrudes from the edge of the screen 102, the larger the height of the baffle 104 may be set, for example, h1 shown in the sub-diagram (a) in FIG. 2. On the contrary, the height of the baffle 104 may be set to a smaller value, for example, h2 shown in the sub-diagram (b) in FIG. 2, where h1>h2. In this way, most of the stray light reaching the screen support 103 can be blocked. This greatly reduces optical power on the screen support, prevents the screen support 103 from being burnt due to overheating, and improves use safety of the product. In addition, when the baffle 104 is set to be high, stray light from the first curved mirror 105 to the second curved mirror 106 may be further blocked, thereby further reducing optical power of the second curved mirror 106 and prolonging a service life of the second curved mirror 106. It should be noted herein that, if the four baffles 104 jointly surround the image generation apparatus 101, heights of the four baffles may be consistent or may be different. A value of a height of each baffle is not limited in this application, and may be set based on an application scenario. Similarly, if an entire integrally formed baffle surrounds the image generation apparatus 101, heights of the baffle in all positions may be consistent or different. Details are not described herein.

It should be further noted that, in some other implementations of this application, for better heat conduction, the baffle 104 may be made of a high-temperature-resistant material. For example, the baffle may be made of single metal (such as iron, copper, or aluminum) or a metal alloy (for example, steel, brass, or an aluminum alloy), or may be made of another non-metal high-temperature-resistant material (for example, a high-temperature-resistant polymer or a high-temperature-resistant fiber material). This is not specifically limited in this application.

In addition, in some implementations of this application, an included angle between a plane on which the baffle 104 is located and a plane on which the screen 102 is located (where the included angle may be referred to as a plane included angle for short) may also be set based on an actual requirement. Specifically, the plane included angle between the baffle 104 and the screen 102 may be within a preset angle range, for example, may be not less than a first included angle value (for example, 20°) and not greater than a second included angle value (for example, 160°). The first included angle value and the second included angle value may be user-defined, for example, value ranges of the two included angle values may be adjusted based on the height of the baffle 104. This is not limited in this application. For example, refer to FIG. 3. The sub-diagram (a) in FIG. 3 shows that plane included angles between the four baffles 104 all around the screen 102 and the screen 102 are 90°, and the sub-diagram (b) in FIG. 3 shows that plane included angles between the four baffles 104 all around the screen 102 and the screen 102 are 120°.

It should be noted herein that, FIG. 3 shows that values of the plane included angles between the four baffles 104 all around the screen 102 and the screen 102 are the same. In some application scenarios, the plane included angles between the four baffles 104 and the screen 102 may be different. For example, plane included angles between two opposite baffles 104 and the screen 102 may be 60°, and plane included angles between the other two opposite baffles 104 and the screen 102 may be 120°. Specifically, a specific value of the plane included angle between each baffle 104 and the screen 102 is not limited in this application.

It should be further noted that, in some implementations of this application, the height of the baffle 104 may be set based on the size of the screen support 103, or may be set based on a value of a plane included angle between the baffle 104 and the screen 102. In an example, when the plane included angle is 90°, the height of the baffle 104 may be set to a smaller value. When the plane included angle is between 20° and 90°, the height of the baffle 104 is in a negative correlation relationship with the value of the plane included angle (that is, a larger plane included angle indicates a smaller height). When the plane included angle is between 90° and 160°, the height of the baffle 104 is in a positive correlation relationship with the value of the plane included angle (that is, a larger plane included angle indicates a larger height).

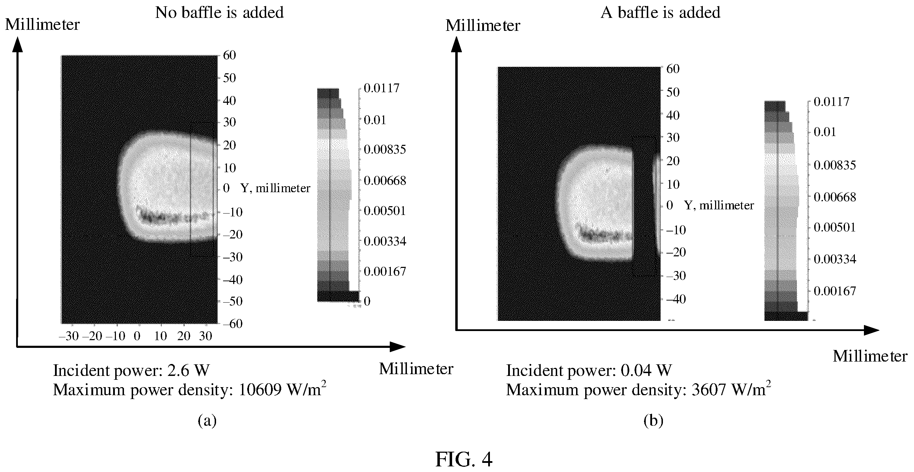

To provide a more intuitive understanding of beneficial effect brought by embodiments of this application, the following further compares the technical effect brought by embodiments of this application. Refer to FIG. 4. FIG. 4 is a diagram of energy simulation result comparison of solar load of the screen support 103. Units of horizontal coordinates and vertical coordinates of diagrams (a) and (b) in FIG. 4 are both millimeter. (a) in FIG. 4 shows a case in which no baffle is added. When no baffle is added, incident power of the screen support is 2.6 W, and maximum power density is 10609 W/m². (b) in FIG. 4 shows a case in which a baffle is added. When the baffle is added, incident power of the screen support is 0.04 W, and maximum power density is 3607 W/m². It can be learned that, for the display device with the baffle, both the incident power and the maximum power density of the screen support are greatly reduced.

In a related product in which the display device is deployed, direct sunlight emitted to a mechanical part of the display device overheats the mechanical part. In addition, direct sunlight emitted to an internal mirror (for example, a curved mirror of an HUD) of the display device or light reflected by the mechanical part may form a white spot (namely, glare) in a field of view when being seen by a human eye, thereby affecting user experience (for example, affecting driving). To reduce impact of glare, in some implementations of this application, glare may be further eliminated by adding a small-angle light filter, a polarizing film, a quarter wave plate, or the like above the screen. The two manners reduce most glare that is incident to the screen and reflected. Details are separately described below.

### 1. Add a light filter whose emergent angle is within a preset threshold range above the screen.

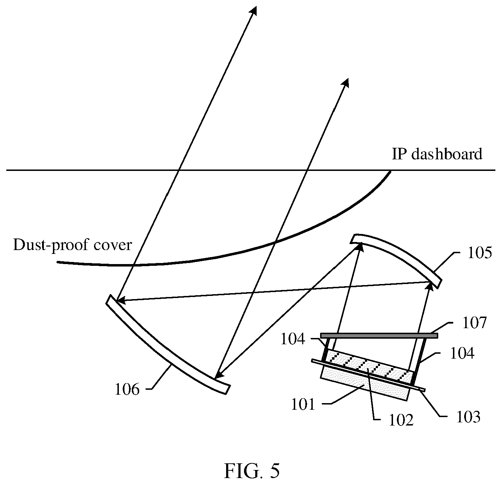

Specifically, refer to FIG. 5. In FIG. 5, an example in which the display device is an HUD is still used for illustration. In this embodiment of this application, a light filter 107 whose emergent angle is within a preset threshold range (for example, the emergent angle is ±5°) may be added above the screen 102 of the display device, and is configured to allow a light beam whose emergent angle is within the preset threshold range to pass through. The light beam is propagated by the image generation apparatus 101 to the light filter 107. In this embodiment of this application, the preset threshold range may be set to a small value. Therefore, the light filter used in this application may also be referred to as a small-angle light filter. In other words, the light filter allows only a light beam within a small angle range to be emitted from the light filter, for example, a light beam with a ±5° angle, and a light beam with a larger angle cannot pass through. In this application, imaging light generated by the image generation apparatus 101 is of a small-angle light beam, and may pass through the light filter 107. Large-angle glare formed through reflection after the screen 102 is directly irradiated by the sun cannot pass through the light filter 107. In this way, solar glare can be greatly reduced. It should be noted that a type of the used light filter is not limited in this application.

It should be noted that in FIG. 5, an HUD is used as an example for illustration. Therefore, the HUD has the first curved mirror 105 and the second curved mirror 106. To prevent specular reflection, the light filter 107 and the screen 102 may be disposed at an included angle. To be specific, the included angle between the light filter 107 and the screen 102 is greater than zero (that is, the light filter 107 and the screen 102 are not parallel).

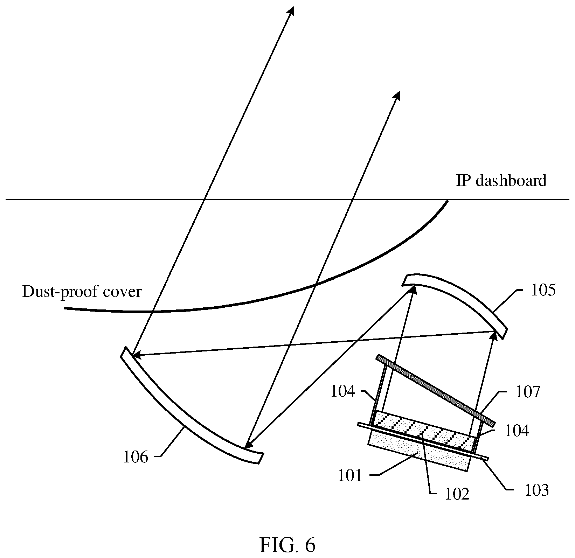

It should be noted that, in this embodiment of this application, the light filter 107 and the screen 102 are disposed at an included angle, and may be set in a tilt manner shown in FIG. 5 or a tilt manner shown in FIG. 6. In addition, a tilt angle (namely, the included angle) may be set based on a specific application scenario. This is not limited in this application.

It should be further noted that, in FIG. 5, the HUD is used as an example. In some other implementations of this application, the display device may not need modules such as the first curved mirror 105, the second curved mirror 106, and the dust-proof cover, or may add or delete some other modules based on an application requirement. This is not limited in this application. However, the image generation apparatus 101, the screen 102, the screen support 103, and the light filter 107 are mandatory modules.

It should be further noted that, in FIG. 5, the light filter 107 is deployed on the upper side of the baffle 104 (that is, the baffle 104 is used as a supporting mechanical part of the light filter 107), that is, functions of preventing the screen support 103 from overheating and preventing solar glare are implemented in a combination manner of "the baffle 104 + the light filter 107". However, in some other implementations of this application, the light filter 107 may be independently deployed, that is, is not deployed on the upper side of the baffle 104, but is supported by an additional support mechanical part (for example, four supports), that is, only "the light filter 107" is used to implement the function of preventing solar glare. During actual application, a solution may be selected based on a function requirement. This is not limited in this application.

### 2. Add a polarizing film and a quarter wave plate above the screen.

In this embodiment of this application, a combination of a polarizing film and a quarter wave plate may be alternatively used to eliminate glare. Specifically, both the polarizing film and the quarter wave plate are located above the screen. The polarizing film is configured to transmit S-polarized light and block transmission of P-polarized light, that is, the polarizing film transmits the S-polarized light but does not transmit the P-polarized light (in other words, the P-polarized light cannot be emitted from the polarizing film). The quarter wave plate is configured to convert the S-polarized light into P-polarized light when the S-polarized light passes through the quarter wave plate for the second time, that is, the S-polarized light becomes P-polarized light after passing through the quarter wave plate twice. In this embodiment of this application, a specific manner of disposing the polarizing film and the quarter wave plate may include but is not limited to the following manners.

### (1) The polarizing film and quarter wave plate are above the screen.

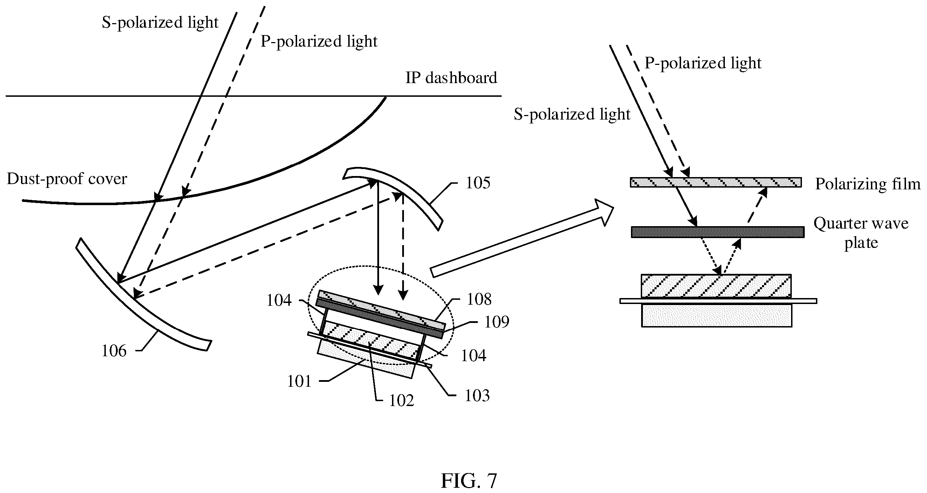

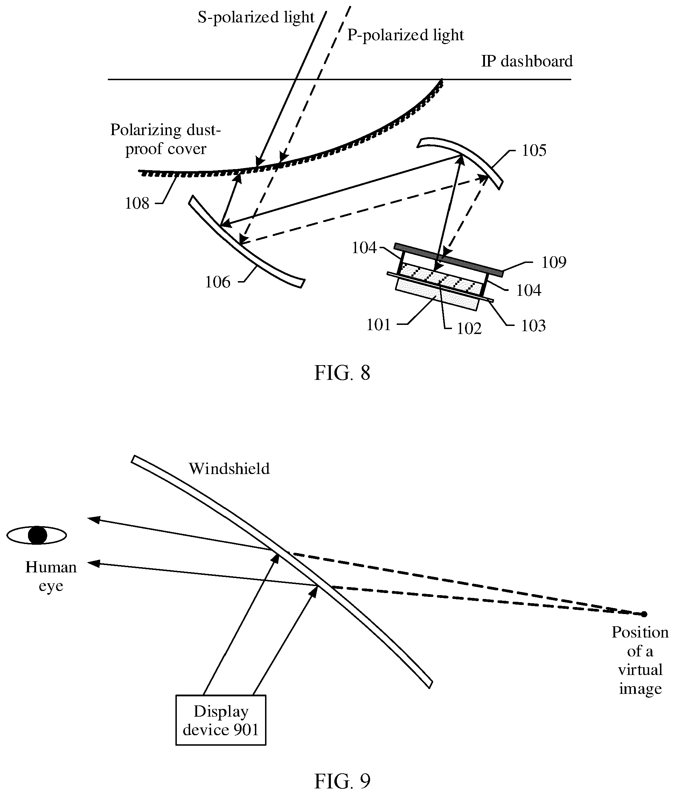

Specifically, refer to FIG. 7 (an HUD is used as an example). A polarizing film 108 and a quarter wave plate 109 are directly added above the screen 102, and the polarizing film 108 is above the quarter wave plate 109. It should be noted herein that, in this case, the polarizing film 108 and the quarter wave plate 109 are attached together. FIG. 7 is used to show a working principle of the polarizing film 108 and the quarter wave plate 109. Therefore, the polarizing film 108 and the quarter wave plate 109 separated in the drawing, where the polarizing film 108 and the quarter wave plate 109 may be completely closely attached together with no gap, or a gap may be reserved between the polarizing film 108 and the quarter wave plate 109 (for example, glass is used for separation). This is not specifically limited in this application. After sunlight (including P-polarized light shown by a dashed line and S-polarized light shown by a solid line in FIG. 8) passes through the polarizing film 108, the S-polarized light is transmitted, and the S-polarized light becomes P-polarized light after passing through the quarter wave plate 109 twice. Because the P-polarized light cannot be emitted from the polarizing film 108, a risk of glare is reduced.

It should be further noted that, in this embodiment of this application, the quarter wave plate 109 may be attached to the screen 102 (for ease of description of a principle in FIG. 7, the quarter wave plate 109 and the screen 102 are parallel), or may be independently deployed. However, it needs to be ensured that S-polarized light transmitted from the polarizing film 108 is not vertically incident to the quarter wave plate 109. This is to avoid a problem that a polarization state is not completely converted and light is easily cluttered when light passes through the polarizing film and the quarter wave plate at different angles.

It should be further noted that the polarizing film 108 transmits S-polarized light and blocks P-polarized light. In some other implementations of this application, a polarizing film that transmits P-polarized light and blocks S-polarized light may alternatively be used. In this case, in FIG. 7, the dashed line indicates S-polarized light, the solid line indicates P-polarized light, and other processes are similar. Details are not described herein.

Similarly, in FIG. 7, the HUD is used as an example. In some other implementations of this application, the display device may not need modules such as the first curved mirror 105, the second curved mirror 106, and the dust-proof cover, or may add or delete some other modules based on an application requirement. This is not limited in this application. However, the image generation apparatus 101, the screen 102, the screen support 103, the polarizing film 108, and the quarter wave plate 109 are mandatory modules.

### (2) The polarizing film is deployed on the dust-proof cover, and the quarter wave plate is above the screen.

Specifically, refer to FIG. 8 (an HUD is used as an example). In this embodiment of this application, the polarizing film 108 is deployed on the dust-proof cover (as shown by double dashed lines in FIG. 8 that are attached to the dust-proof cover), and the dust-proof cover on which the polarizing film 108 is deployed may be referred to as a polarizing dust-proof cover (in the HUD, the dust-proof cover is located above the curved mirror, and therefore, the dust-proof cover on which the polarizing film 108 is deployed is also located above the screen 102). The quarter wave plate 109 is above the screen 102 (for example, is attached to the screen 102 or independently deployed). When sunlight is emitted into the polarizing dust-proof cover, only S-polarized light can pass through. The S-polarized light is converted into P-polarized light after passing through the quarter wave plate twice, and cannot pass through the polarizing dust-proof cover. Therefore, glare can be reduced.

Similarly, the polarizing film 108 transmits S-polarized light and blocks P-polarized light. In some other implementations of this application, a polarizing film that transmits P-polarized light and blocks S-polarized light may alternatively be used. In this case, in FIG. 8, the dashed line indicates S-polarized light, the solid line indicates P-polarized light, and other processes are similar. Details are not described herein.

It should be noted that the foregoing two manners in this application are two typical manners of disposing the polarizing film and the quarter wave plate. In some other implementations of this application, for example, the quarter wave plate 109 may be attached to the polarizing film 108 to form a combined film, and then the combined film is disposed on the dust-proof cover. Specific disposition positions of the polarizing film 108 and the quarter wave plate 109 are not limited in this application.

Similarly, in FIG. 7 or FIG. 8, in addition to the polarizing film 108 and the quarter wave plate 109, there is further the baffle 104. The baffle 104 may be used as a supporting mechanical part of the quarter wave plate 109 (or the combined film of the polarizing film 108 and the quarter wave plate 109), to be specific, the functions of preventing the screen support 103 from overheating and preventing solar glare are implemented in a combination manner of "the baffle 104 + the polarizing film 108 and the quarter wave plate 109". However, in some other implementations of this application, the polarizing film 108 and the quarter wave plate 109 may be independently deployed, that is, the baffle 104 is not required, and only "the polarizing film 108 and the quarter wave plate 109" are used to implement the function of preventing solar glare. During actual application, a solution may be selected based on a function requirement. This is not limited in this application.

It should be further noted that, in some other implementations of this application, to enhance the function of preventing solar glare, functions of preventing the screen support 103 from overheating and better preventing solar glare are implemented in a combination manner of "the baffle 104 + the light filter 107 + the polarizing film 108 and the quarter wave plate 109"; or only the function of better preventing solar glare is implemented in a combination manner of "the light filter 107 + the polarizing film 108 and the quarter wave plate 109". A manner of disposing the baffle 104, the light filter 107, the polarizing film 108, and the quarter wave plate 109 is similar to the foregoing independently deploying process. During actual application, only combination is required. For details, refer to the foregoing descriptions. Details are not described herein again.

Because the display device provided in embodiments of this application may be used in the fields of an intelligent terminal, intelligent driving, and the like to display an image, the following describes a plurality of application scenarios implemented in a product.

### (1) The display device is an HUD.

In a possible application scenario, the display device provided in this embodiment of this application may be an HUD. The HUD may project navigation information, instrument information, and the like into a front view of a driver, to prevent the driver from looking down to view the information, which affects driving safety. After an image projected by the HUD is reflected by a windshield, a virtual image is formed outside a transportation means. A type of the HUD includes but is not limited to a windshield (windshield, W)-HUD, augmented reality head-up display (AR-HUD), and the like. In a process of driving the transportation means by the driver, light reflected after sunlight is directly emitted into a curved mirror inside the HUD or a mechanical part is seen by the driver. As a result, a white spot is formed in the view, which affects driving. Therefore, the HUD provided in this embodiment of this application can reduce impact of glare. For example, the polarizing film, the quarter wave plate, the baffle, and/or the small-angle light filter in this embodiment of this application may be disposed in an HUD with a double-concession architecture proposed by Nippon Seiki, to prolong a service life of the HUD and/or reduce impact of glare.

### (2) The display device is a projector.

In a possible application scenario, the display device provided in this embodiment of this application may be a projector, and the projector can project an image onto a wall or a projection screen. In some special use scenarios, for example, outdoor camping and team building, in a watching process of a user, light reflected after sunlight is directly emitted to a mechanical part inside the projector is seen by a human eye. As a result, a white spot is formed in a view, which affects watching experience. Therefore, the projector provided in this embodiment of this application can also reduce impact of glare.

### (3) The display device is a near display (near display, NED) device.

In a possible application scenario, the display device provided in this embodiment of this application may be an NED device, the NED device may be an AR device or a VR device, the AR device may include but is not limited to AR glasses and an AR helmet, and the VR device may include but is not limited to VR glasses and a VR helmet. The AR glasses are used as an example. A user can wear the AR glasses to play a game, watch a video, and join a virtual conference. In some use scenarios, for example, in a scenario in which the user plays a game outdoors, in a process in which the user uses the AR glasses, light reflected after sunlight is directly emitted to a mechanical part inside the AR glasses is seen by a human eye. As a result, a white spot is formed in a view, which affects watching experience. Therefore, the NED device provided in this embodiment of this application can also reduce impact of glare, and improve user experience.

It should be noted that the display device described in this application may be applied to the foregoing application scenarios, and may further be applied to subdivided fields in the display field. An example is not provided herein again.

An embodiment of this application further provides a transportation means, and any one of the foregoing display devices is installed on the transportation means. FIG. 9 is a diagram in which a display device 901 is installed on a transportation means according to an embodiment of this application. A windshield of transportation means can be used as a curved mirror or a lens. When the windshield is used as the curved mirror, the display device 901, and a driver or a passenger are located on a same side of the windshield. When the windshield is used as the lens, the display device 901, and the driver or the passenger are located on different sides of the windshield. The display device 901 is configured to output imaging light. The windshield is used to reflect or transmit the imaging light to form a virtual image. The virtual image is on one side of the windshield, and the driver or the passenger is on the other side of the windshield. The reflected or transmitted imaging light is illuminated to eyes of the driver or the passenger.

For example, the transportation means may be a car, a truck, a motorcycle, a bus, a ship, an airplane, a helicopter, a lawn mower, an entertainment car, a playground vehicle, a construction device, a tram, a golf cart, a train, a handcart, or the like. This is not specially limited in embodiments of this application. The display device 901 may be installed on an instrument panel (instrument panel, IP) dashboard of the transportation means, and is located on a front passenger position or a driver position, or may be installed on a back of a seat. The display device 901 may be referred to as an HUD when being used in the transportation means, and may be configured to display navigation information, a vehicle speed, an electricity amount/fuel amount, and the like.

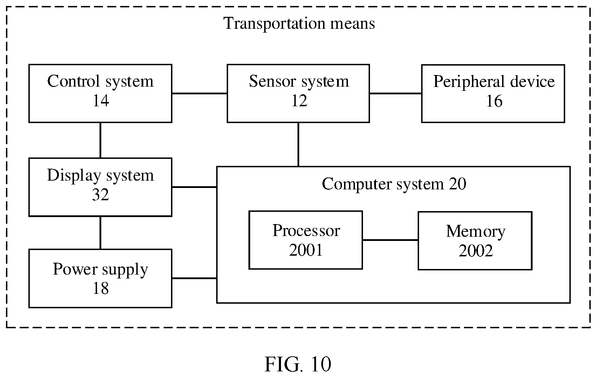

FIG. 10 is a diagram of a possible functional framework of a transportation means according to an embodiment of this application. As shown in FIG. 10, a functional framework of the transportation means may include various subsystems, for example, a control system 14, a sensor system 12, one or more peripheral devices 16 (one is used as an example in the figure), a power supply 18, a computer system 20, and a display system 32. Optionally, the transportation means may further include another function system, for example, an engine system that supplies power to the transportation means. This is not limited herein in this application.

The sensor system 12 may include several detection apparatuses. The detection apparatuses can sense measured information, and convert, according to a specific rule, the sensed information into an electrical signal or information of another required form for output. As shown in the figure, the detection apparatuses may include a global positioning system (global positioning system, GPS), a vehicle speed sensor, an inertial measurement unit (inertial measurement unit, IMU), a radar unit, a laser rangefinder, a camera apparatus, a wheel speed sensor, a steering sensor, a gear sensor, another element used for automatic detection, or the like. This is not limited in this application.

The control system 14 may include several elements, for example, a steering unit, a brake unit, a lighting system, a self-driving system, a map navigation system, a network time system, and an obstacle avoidance system shown in the figure. Optionally, the control system 14 may further include elements such as an accelerator controller and an engine controller that are configured to control a driving speed of a vehicle. This is not limited in this application.

The peripheral device 16 may include several elements, for example, a communication system, a touchscreen, a user interface, a microphone, and a speaker shown in the figure. The communication system is configured to implement network communication between the transportation means and another device other than the transportation means. During actual application, the communication system may implement network communication between the transportation means and the another device by using a wireless communication technology or a wired communication technology. The wired communication technology may mean that the vehicle communicates with the another device through a network cable, an optical fiber, or the like.

The power supply 18 represents a system used to provide power or energy for the vehicle, and may include but is not limited to a rechargeable lithium battery and lead-acid battery. During actual application, one or more battery components in the power supply are configured to provide electrical energy or energy for starting the vehicle. A type and a material of the power supply are not limited in this application.

Implementation of several functions of the transportation means is controlled by the computer system 20. The computer system 20 may include one or more processors 2001 (one processor is shown as an example in the figure) and a memory 2002 (also referred to as a storage apparatus). During actual application, the memory 2002 is also inside the computer system 20, or may be outside the computer system 20, for example, used as a cache in the transportation means. This is not limited in this application.

For a description of the processor 2001, refer to the foregoing descriptions of the processor 1001. The processor 2001 may include one or more general-purpose processors, for example, a graphic processing unit (graphic processing unit, GPU). The processor 2001 may be configured to run a related program stored in the memory 2002 or instructions corresponding to a program, to implement a corresponding function of the vehicle.

The memory 2002 may include a volatile memory (volatile memory), for example, a RAM. The memory may alternatively include a non-volatile memory (non-volatile memory), for example, a ROM, a flash memory (flash memory), or a solid-state drive (solid state drive, SSD). Alternatively, the memory 2002 may include a combination of the foregoing types of memories. The memory 2002 may be configured to store a set of program code or instructions corresponding to program code, so that the processor 2001 invokes the program code or the instructions stored in the memory 2002 to implement a corresponding function of the vehicle. The function includes but is not limited to some or all functions in the diagram of the functional framework of the vehicle shown in FIG. 13. In this application, the memory 2002 may store a set of program code used for vehicle control. The processor 2001 may control safe driving of the vehicle by invoking the program code. A manner of implementing safe driving of the vehicle is specifically described in detail below in this application.

Optionally, in addition to storing the program code or instructions, the memory 2002 may further store information such as a road map, a driving route, and sensor data. The computer system 20 may implement a related function of the vehicle in combination with other elements in the diagram of the functional framework of the vehicle, for example, the sensor and the GPS in the sensor system. For example, the computer system 20 may control a driving direction, a driving speed, or the like of the transportation means based on data input of the sensor system 12. This is not limited in this application.

The display system 32 may include several elements, for example, a controller and the display device 901 described above. The controller is configured to generate an image (for example, generate an image including a vehicle status like a vehicle speed and an electricity amount/fuel amount, and an image of augmented reality AR content) according to a user instruction, and send the image content to the display device 901. An image generation apparatus in the display device 901 is configured to output imaging light that carries image information. The windshield is configured to reflect or transmit the imaging light, so that a virtual image corresponding to the image content is presented in front of a driver or a passenger. It should be noted that functions of some elements in the display system 32 may alternatively be implemented by another subsystem of the vehicle. For example, the controller may alternatively be an element in the control system 14.

FIG. 10 in this application shows that four subsystems are included. The sensor system 12, the control system 14, the computer system 20, and the display system 32 are merely examples, and do not constitute a limitation. During actual application, the transportation means may combine several elements in the vehicle based on different functions, to obtain subsystems with corresponding different functions. During actual application, the transportation means may include more or fewer systems or elements. This is not limited in this application.

In the descriptions of this specification, the described specific features, structures, materials, or characteristics may be combined in a proper manner in any one or more of embodiments or examples.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A display device, comprising:
an image generation apparatus, a screen, a screen support, and a baffle, wherein
the image generation apparatus is configured to: generate imaging light that carries image information, and emit the imaging light to the screen;
the screen is configured to display the imaging light;
the screen support is configured to support the screen; and
the baffle is located around the screen, and is configured to block stray light reaching the screen support.

2. The device according to claim **1,** wherein a property of the baffle comprises:
a high-temperature-resistant material.

3. The device according to either of claims 1 and 2, wherein an included angle between a plane on which the baffle is located and a plane on which the screen is located is within a preset angle range.

4. The device according to any one of claims 1 to 3, wherein the device further comprises:
a light filter, wherein
the light filter is located above the screen, and is configured to allow a light beam whose emergent angle is within the preset threshold range to pass through, wherein the light beam is propagated by the image generation apparatus to the light filter.

5. The device according to claim 4, wherein an included angle between the light filter and the screen is greater than zero.

6. The device according to any one of claims 1 to 5, wherein the device further comprises:
a polarizing film and a quarter wave plate that are located on a same side of the screen, wherein sunlight is sequentially emitted into the polarizing film, the quarter wave plate, and the screen;
the polarizing film is configured to: transmit S-polarized light and block transmission of **P-**polarized light; and
the quarter wave plate is configured to transmit the S-polarized light, so that the transmitted S-polarized light is changed to P-polarized light after being reflected by the screen and then passing through the quarter wave plate again.

7. The device according to any one of claims 1 to 5, wherein the device further comprises:
a dust-proof cover, a polarizing film located on the dust-proof cover, and a quarter wave plate located on the screen, wherein sunlight is sequentially emitted into the dust-proof cover, the polarizing film, the quarter wave plate, and the screen;
the polarizing film is configured to: transmit S-polarized light and block transmission of P-polarized light; and
the quarter wave plate is configured to transmit the S-polarized light, so that the transmitted S-polarized light is changed to P-polarized light after being reflected by the screen and then passing through the quarter wave plate again.

8. The device according to any one of claims 1 to 5, wherein the device further comprises:
a dust-proof cover, a polarizing film located on the dust-proof cover, and a quarter wave plate located on the screen, wherein sunlight is sequentially emitted into the polarizing film, the dust-proof cover, the quarter wave plate, and the screen;
the polarizing film is configured to: transmit S-polarized light and block transmission of P-polarized light; and
the quarter wave plate is configured to transmit the S-polarized light, so that the transmitted S-polarized light is changed to P-polarized light after being reflected by the screen and then passing through the quarter wave plate again.

9. The device according to any one of claims 1 to 5, wherein the device further comprises:
a dust-proof cover, a curved mirror, a polarizing film located on the curved mirror, and a quarter wave plate located on the screen, wherein sunlight is sequentially emitted into the dust-proof cover, the polarizing film, the curved mirror, the quarter wave plate, and the screen;
the polarizing film is configured to: transmit S-polarized light and block transmission of P-polarized light; and
the quarter wave plate is configured to transmit the S-polarized light, so that the transmitted S-polarized light is changed to P-polarized light after being reflected by the screen and then passing through the quarter wave plate again.

10. The device according to claim 9, wherein the curved mirror comprises:
a first curved mirror and a second curved mirror; and
the first curved mirror and the second curved mirror are configured to sequentially reflect the imaging light.

11. A transportation means, comprising the display device according to any one of claims 1 to 10, wherein the display device is installed on the transportation means.

12. The transportation means according to claim 11, wherein the transportation means further comprises:
a reflection element, wherein the display device is configured to project imaging light onto the reflection element, and the reflection element is configured to reflect the imaging light to form a virtual image.
